# DEMANDE DE BREVET EUROPEEN

(11) **EP 1 793 043 A1**
(43) Date de publication de la demande: **06.06.2007**
(21) Numéro de dépôt: 05026446.4
(22) Date de dépôt: 05.12.2005
(51) Int. Cl.: E02B 3/10

(54) **Digue mobile anti-inondations**

(71) Demandeur: Widell, Eric, 1222 Vésenaz (CH)
(72) Inventeur: Widell, Eric, 1222 Vésenaz (CH)
(74) Mandataire: Reuteler, Raymond Werner

(57) **Abrégé**

La digue anti-inondations est constituée d'une pluralité d'éléments de digues (1) aptes à se redresser en cas d'inondation par effet d'Archimède, afin de constituer une paroi de retenue continue. Chaque élément de digue comprend des moyens d'étanchéité (16,18) à sa base et sur ses côtés.

## Description

La présente invention concerne une protection contre les inondations au moyen d'une digue mobile.

De tous temps on a cherché à se protéger contre les crues ou inondations subites et inattendues. A côté des digues et murs de retenue fixes élevés aux endroits stratégiques, divers moyens mobiles ont été conçus afin de pouvoir être rapidement mis en fonction en cas de nécessité.

Certains dispositifs prévoient de disposer des panneaux de retenue sur des cadres prédisposés ; ces dispositifs ne peuvent être rapidement efficaces dans la mesure où ils nécessitent une main d'oeuvre ou des moyens importants pour leur installation. D'autres dispositifs prévoient un ou plusieurs boudins gonflables placés aux endroits stratégiques ; ces dispositifs nécessitent la présence et la mise en action d'une installation de gonflage pour fonctionner. Des panneaux mobiles actionnés par la poussée des eaux ont été décrits, comme par exemple dans DE 102 01 882 ou EP 1.273.712. Ces deux dispositifs nécessitent avant tout d'importants travaux de génie civil pour la confection de chambres destinées à se remplir d'eau en cas d'inondation afin de permettre l'élévation de flotteurs portant des panneaux mobiles. Par ailleurs, ces chambres nécessitent un entretien important et constant afin de fonctionner correctement en cas d'inondation.

Le dispositif décrit dans DE 101 62 568 représente l'art antérieur le plus proche du dispositif selon la présente invention. Ce document décrit une pluralité de panneaux destinés à pivoter sur une bordure inférieure de forme cylindrique sous l'action de la poussée des eaux due à l'effet d'Archimède. Ce dispositif comporte néanmoins plusieurs inconvénients. Tout d'abord, les figures montrent des panneaux mobiles fortement incrustés dans le sommier d'accueil, rendant de ce fait problématique la pénétration de l'eau autour des panneaux pour permettre leur élévation par le principe d'Archimède ; d'autre part, la chambre vide prévue pour le roulement de la surface cylindrique du panneau peut facilement se remplir de cailloux, branches ou autres détritus, empêchant ainsi le fonctionnement correct du dispositif ; comme elle est conçue la béquille destinée à empêcher un basculement du panneau vers l'arrière nécessite d'être tout d'abord dégagée manuellement pour permettre le relèvement du panneau et le dispositif décrit nécessite d'installer des chaînes de retenue pour maintenir les panneaux en position verticale, ces deux dernières caractéristiques impliquant la présence de main d'oeuvre pour la mise en action du dispositif.

Un but de la présente invention est donc de proposer un dispositif de digue mobile anti-inondations ne rencontrant pas les inconvénients des dispositifs connus de l'art antérieur. En particulier, la digue mobile doit être complètement escamotée en temps normal et doit pouvoir se dresser automatiquement en cas de montée des eaux, sans nécessiter de main d'oeuvre ni de moyens auxiliaires, par exemple une source d'énergie, à cet effet. Son fonctionnement doit pouvoir être absolument sûr.

A cet effet, une digue mobile anti-inondations est décrite à la revendication 1, des formes d'exécution particulières ou variantes étant décrites dans les revendications dépendantes.

Une forme d'exécution d'une digue anti-inondations selon l'invention est décrite ci-dessous, cette description étant à considérer en regard du dessin annexé comportant les figures où :
la figure 1 est une vue en coupe longitudinale d'un élément de digue selon une forme d'exécution de l'invention en position de repos,
la figure 2 est une vue en coupe longitudinale du même élément de digue selon une position de retenue d'inondation,
la figure 3 est une vue perpendiculaire à celle de la figure 1,vue depuis la rivière ou le lac,
la figure 4 est une vue montrant deux détails d'une béquille d'appui,
la figure 5 est une vue en coupe longitudinale du même élément de digue selon une autre position de retenue d'inondation,
la figure 6 montre un détail d'exécution d'une charnière permettant le redressement des panneaux, et
la figure 7 montre un détail d'exécution de moyens d'étanchéité

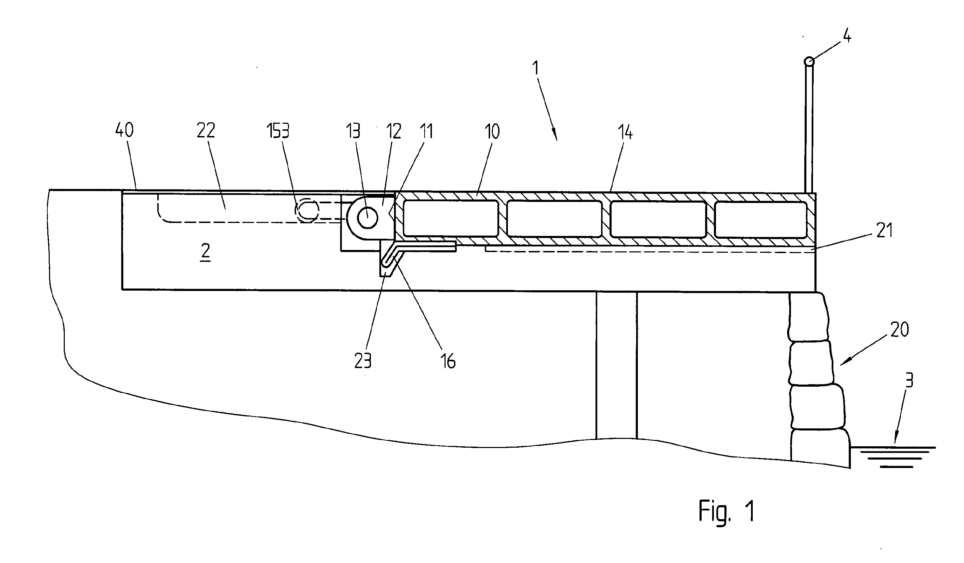

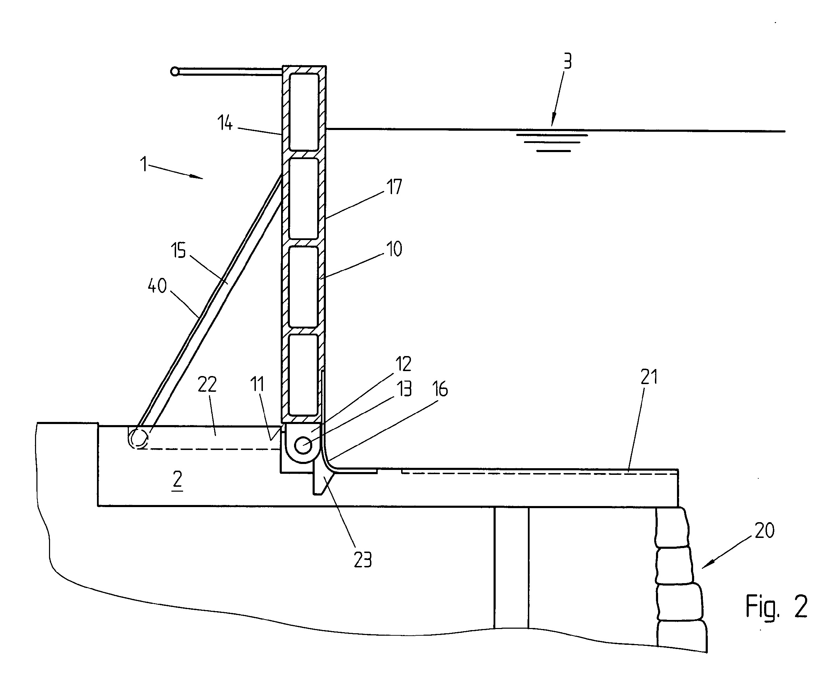

Sur les figures 1 et 2 on voit un élément de digue mobile 1, en position de repos à la figure 1 et en position redressée de retenue des eaux à la figure 2. L'élément de digue 1 est composé essentiellement d'un élément de paroi 10, comportant une bordure inférieure 11 à laquelle sont fixés un ou plusieurs éléments de charnières 12 permettant à l'élément de digue mobile 1 de pivoter autour d'un axe essentiellement horizontal 13. Le dispositif ci-dessus est disposé sur un sommier 2, de préférence en béton ou béton armé, aménagé sur la rive 20. L'élément de digue mobile 1 est prévu pour se dresser automatiquement, afin de prendre une position de retenue, par exemple la position verticale représentée à la figure 2, afin de retenir les eaux en cas de montée du niveau 3 de celles-ci. Pour ceci, l'élément de digue mobile 1 doit être le plus léger possible, l'élément de paroi 10 étant conçu et construit pour présenter une densité relative inférieure à la valeur 1. Une forme d'exécution possible de cet élément de paroi 10 est représentée sur les figures, chaque élément de paroi 10 étant par exemple constitué d'un assemblage de caissons creux étanches, par exemple soudés, collés ou assemblés entre eux de n'importe quelle manière adaptée, ces caissons pouvant être en métal comme de l'acier, ou en métal léger, ou en bois ou en matériau synthétique, ou en une combinaison de ces matériaux. L'important est que l'élément de digue mobile présente une densité relative inférieure à la valeur 1 tout en ayant une résistance mécanique suffisante pour résister à la pression de l'eau en cas de crue.

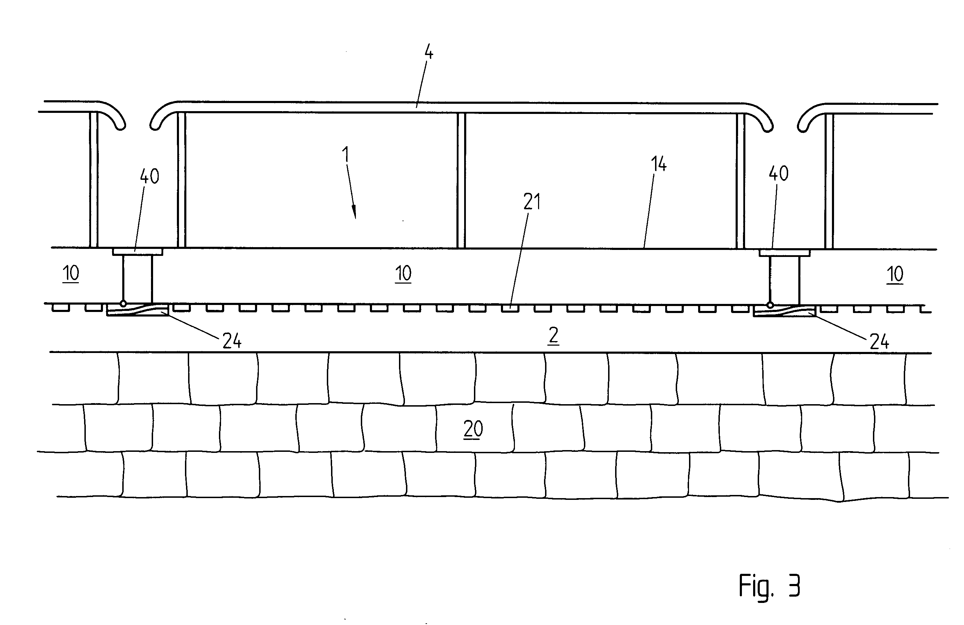

Afin de permettre le redressement des éléments de digues 1 en cas de crue, il est nécessaire que chaque élément de digue puisse être soulevé par l'eau en cours de crue par effet d'Archimède ; il est donc nécessaire que l'eau puisse facilement atteindre au moins la surface inférieure 17 de chaque élément de paroi 10. Pour ceci, on peut prévoir des moyens permettant la circulation de l'eau afin qu'au moins la surface inférieure 17 soit convenable immergée en cas de crue, ces moyens pouvant être par exemple, comme on peut le voir à la figure 3, des rainures 21 aménagées dans le sommier 2, lesdites rainures étant ouvertes en direction de la rivière ou du lac. Tout autre moyen que les rainures décrites ici, permettant d'assurer que la face inférieure 17 de chaque élément de paroi soit atteinte par l'eau en cours de crue peut évidemment être proposé.

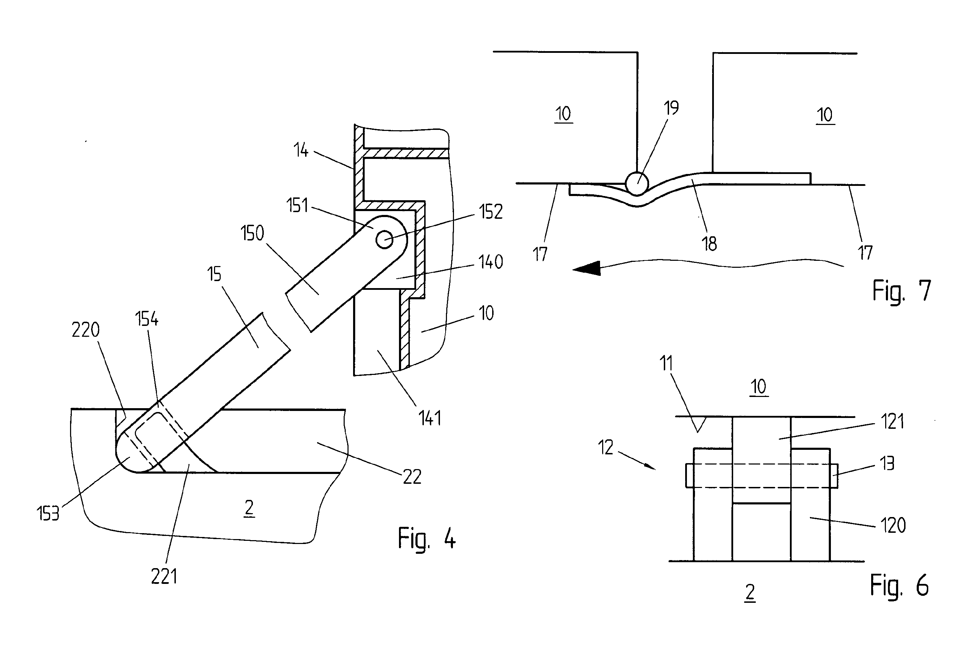

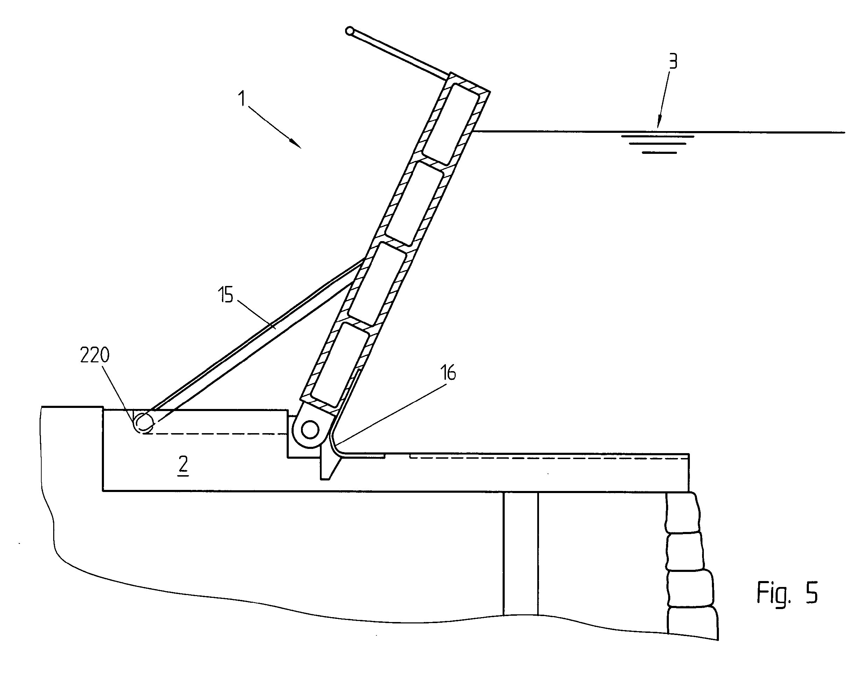

Afin d'empêcher l'élément de digue mobile 1 de basculer vers l'arrière lors de son redressement sous l'action de l'eau, la face supérieure 14 de chaque élément de paroi 10 peut être équipée de une ou plusieurs béquilles de retenue 15, dont des détails de réalisation selon une forme d'exécution sont représentés à la figure 4. Chaque béquille de retenue 15 est constituée essentiellement d'une barre rigide 150, de préférence métallique, dont une première extrémité 151 est montée pivotante autour d'un axe 152 disposé dans un premier logement 140 débouchant sur la face supérieure 14. L'autre extrémité 153 de la barre 150 est apte à coulisser dans un guidage creux 22 aménagé sur la face supérieure de la portion arrière du sommier 2. L'extrémité arrière du guidage creux 22 est aménagée en une butée 220 dont la position est déterminée de manière à ce que, selon la longueur de la barre 150 et selon la position de l'axe 152 sur la face supérieure 14, l'élément de digue 1 arrive en position verticale, selon la forme d'exécution représentée à la figure 2, en cas de redressement suite à une crue. La face supérieure 14 comporte de préférence un deuxième logement 141, reliée au premier logement 140, destiné à recevoir la barre 150 lorsque l'élément de digue 1 est en position de repos, de manière à ce que cette barre ne fasse pas saillie sur la face supérieure 14.

Lors d'une crue, de nombreux débris peuvent venir s'accrocher aux éléments de digues redressés ou se disposer sur la face supérieure du sommier 2 à découvert. Il peut donc être avantageux que les éléments de digues ne puissent se rabattre immédiatement lors de la décrue. C'est pourquoi, selon une variante d'exécution, chaque béquille 15 peut être munie d'un moyen de retenue en position dressée, par exemple un ergot 221 disposé à proximité de la butée 220 et destiné à s'enfiler automatiquement dans un trou correspondant 154 aménagé proche de l'extrémité 153 de la barre 150. D'autres formes d'exécution de moyens de retenue peuvent être prévus, par exemple un cliquet empêchant le mouvement de retour de la béquille ou un logement aménagé dans le guidage creux pour retenir l'extrémité 153 de la barre 150.

Il n'est pas absolument indispensable que l'élément de digue mobile 1 vienne en position verticale en cas de crue ; par exemple comme représenté à la figure 5, il peut être prévu que chaque élément de digue se redresse jusqu'à une position inclinée vers l'avant d'un angle déterminé. Cette position peut être avantageuse selon la configuration du terrain sur lequel les éléments de digues 1 sont disposés ou alors afin d'augmenter l'effet d'arc-boutement de la béquille 15 contre l'élément de digue 1.

La figure 6 montre un détail d'exécution d'une forme d'exécution d'un élément de charnière 12 permettant le pivotement des éléments de digue 1. Deux supports 120 sont encastrés et fixés dans le sommier 2, alors qu'une pièce correspondante 121 est fixée, par soudure ou autre moyen à la bordure inférieure 11 de l'élément de paroi 10. Les deux supports 120 ainsi que la pièce 121 sont traversés par un arbre 13. Chaque élément de paroi 10 est muni de préférence d'au moins deux éléments de charnière 12 facilitant ainsi son redressement.

Une digue de retenue complète est constitué d'une pluralité d'éléments de digue 1 redressés côte à côte, chacun de ces éléments étant rigide, l'étanchéité de la digue ne saurait être assurée uniquement par des parois 10 telles que décrites plus haut. Des moyens d'étanchéité sont donc prévus sur chacun des éléments de digue 1.

Tout d'abord, afin d'assurer l'étanchéité sur la portion inférieure des parois 10, soit entre la bordure inférieure et le sommier 2, la bordure inférieure 11 de chaque paroi 10 est munie d'une première bande souple 16 (voir figures 1, 2 et 5) fixée d'une part à la portion inférieure de la face inférieure 17 de la paroi mobile 10 et d'autre part sur une portion du sommier 2 proche des charnières 12. En position de repos, comme sur la figure 1, la bande souple 16 est repliée et logée dans un logement adéquat 23 aménagé dans une portion du sommier 2, alors qu'en position de digue redressée, comme sur les figures 2 et 5, la bande souple 16 assure l'étanchéité de la portion inférieure de la digue.

De préférence la bande souple 16 sera constituée en un matériau à base de caoutchouc, naturel ou synthétique.

La figure 7 montre un détail d'exécution d'une forme d'exécution d'un moyen apte à assurer l'étanchéité entre deux parois mobiles 10 successives. On voit sur la figure deux bordures de parois 10, vues de dessus, une première paroi comportant, fixée sur la bordure de sa face inférieure 17 proche de l'autre paroi 10, une autre bande souple 18, apte à venir se plaquer contre la face inférieure 17 de l'autre paroi mobile 10. Afin d'améliorer l'étanchéité de cette jonction, un boudin souple 19 peut être prévu sur la bordure de la face inférieure 17 de ladite autre paroi mobile 10. Dans le cas où la digue est chargée de protéger la rive d'une rivière, la bande souple 18 sera de préférence fixée sur la paroi mobile 19 située en amont, de manière à ce que, sous l'action du courant, représenté sur la figure par une flèche, elle se plaque parfaitement contre l'autre paroi 10 ou contre le boudin 19. Cette bande souple 18 sera constituée de préférence en un matériau semblable à celui de la première bande souple 16. On voit sur la figure 3 les logements 24, prévus dans le sommier 2, pour recevoir les bandes souples 18 lorsque les éléments de digue sont en position de repos.

Un élément de digue 1 est dimensionné, en longueur et largeur, selon la configuration topographique du lieu où il doit être implanté, selon la hauteur maximum prévue de montée du niveau d'eau et selon la résistance mécanique offerte par chaque élément de paroi. La longueur d'un élément de digue peut atteindre plus de 10 m, alors que sa hauteur peut être supérieure à 1 m. Le nombre d'éléments de charnière 12 ainsi que le nombre de béquilles 15 installés sur un élément de digue donné seront déterminée essentiellement par la longueur de l'élément en question.

De manière avantageuse, les éléments de digue 1, lorsqu'ils sont en position de repos, comme représenté aux figures 1 et 3, peuvent servir de chaussée, pour piétons ou véhicules légers, en bordure de lac ou de rivière. A cet effet, une barrière 4 peut être disposée sur une bordure de la face supérieure 14 de chaque élément de digue 1, cette dernière face étant aménagée en chaussée.

Des plaques de tôle 40 peuvent être prévues pour boucher tous les joints entre les éléments de parois 10 ainsi que toutes les ouvertures des logements 140 et 141 sur les faces supérieures 14 ainsi qu'au dessus des charnières 12, de manière à obtenir une surface de chaussée relativement lisse et sans obstacles. Selon leur emplacement, ces plaques de tôle peuvent être fixées d'une manière adéquate, par exemple aux béquilles 15, comme sur la figure 2, ou sur des bordures inférieures ou latérales des faces supérieures 14 des éléments de parois 10. Ces plaques de tôle 40 peuvent être simplement posées sur les ouvertures à obstruer, tombant d'elles-mêmes en cas de redressement des éléments de digues. L'important est qu'en aucune manière ces plaques de tôle de couverture 40 empêchent le redressement automatique des éléments de digues.

Des éléments de digues, tels que décrits ci-dessus sont parfaitement adaptés pour se redresser rapidement et automatiquement, sans intervention de main-d'oeuvre et sans moyens auxiliaires, en cas de crue ou d'inondation. L'utilisation de main-d'oeuvre après que les éléments se soient redressés, afin de remettre les éléments en place en fin d'inondation, pour nettoyer l'espace sur le sommier ainsi que pour libérer les béquilles de retenue et surveiller une remise en place correcte des éléments de digue n'est pas critique, dans la mesure où il n'y a plus d'urgence.

## Revendications

1. Digue anti-inondations comprenant une pluralité d'éléments de digue (1), disposés côte à côte, chacun desdits éléments de digue étant normalement en position couchée et étant apte à de redresser sous l'action de l'eau afin de former une digue de retenue d'eau continue,
**caractérisée en ce que**
chaque élément de digue (1) comprend une portion de paroi (10) apte à pivoter autour d'au moins un élément de charnière (12) disposé sur une bordure inférieure (11) de ladite portion de paroi, entre ladite position couchée et une position redressée.

2. Digue anti-inondations selon la revendication 1, **caractérisée en ce que** chacun desdits éléments de digue repose, en position couchée, sur un sommier (2).

3. Digue anti-inondations selon la revendication 2, **caractérisée en ce que** le sommier (2) comprend des moyens (21) permettant à l'eau en cours de crue de venir entourer chacun desdits éléments de digue afin de le soulever par effet d'Archimède.

4. Digue anti-inondations selon la revendication 3. **caractérisée en ce que** chaque élément de paroi (10) est conçu et construit pour présenter une densité relative inférieure à la valeur 1.

5. Digue anti-inondations selon l'une des revendications précédentes, **caractérisée en ce que** chaque élément de paroi (10) comprend au moins une béquille de retenue (15), sous la forme d'une barre rigide (150) de longueur déterminée, disposée sur la face supérieure (14) dudit élément de paroi, une première extrémité (151) de ladite béquille de retenue étant maintenue de manière pivotante autour d'un axe (152) disposé dans un logement creux (140) aménagé dans ladite face supérieure, l'autre extrémité (152) de ladite béquille de retenue étant apte à coulisser dans un guidage creux (22) aménagé dans une face supérieure d'une portion arrière du sommier, jusqu'à une butée d'appui (220), déterminant ainsi la position redressée dudit élément de digue.

6. Digue anti-inondations selon la revendication 5. **caractérisée en ce que** la position redressée de chaque élément de digue est une position verticale.

7. Digue anti-inondations selon la revendication 5. **caractérisée en ce que** la position redressée de chaque élément de digue est une position présentant un angle inférieur à 90° du côté de la face immergée de l'élément de paroi.

8. Digue anti-inondations selon l'une des revendications 5 à 7, **caractérisée en ce qu'**un moyen de retenue (221) est prévu à proximité de la butée d'appui (220) afin de maintenir l'élément de digue en position redressée.

9. Digue anti-inondations selon l'une des revendications précédentes, **caractérisée en ce que** chaque élément de paroi (10) comprend une première garniture d'étanchéité (16) entre la bordure inférieure de sa face inférieure (17) et une portion du sommier (2) proche desdits éléments de charnière (12).

10. Digue anti-inondations selon l'une des revendications précédentes, **caractérisée en ce que** chaque élément de paroi (10) comprend une deuxième garniture d'étanchéité (18) entre une bordure latérale de sa face inférieure (17) et une bordure latérale de la face inférieure de l'élément de paroi adjacent.

11. Digue anti-inondations selon la revendication 10. **caractérisée en ce que** la deuxième garniture d'étanchéité (18) est fixée à la bordure située du côté aval relativement au sens du courant d'eau de la face inférieure de l'élément de paroi.

12. Digue anti-inondations selon l'une des revendications précédentes, **caractérisée en ce que** les faces supérieures (14) de chaque élément de paroi sont aménagées de manière à former une portion de chaussée lorsque la digue est en position couchée.

13. Elément de digue (1) destiné à constituer une portion d'une digue anti-inondations selon l'une des revendications précédentes.
